(19) Europäisches Patentamt
European Patent Office
Office européen des brevets

(11) EP 1 033 379 A2

## (12) EUROPEAN PATENT APPLICATION

(43) Date of publication:
06.09.2000 Bulletin 2000/36

(51) Int. Cl.⁷: **C08G 18/08**, C08J 3/12

(21) Application number: 00104451.0

(22) Date of filing: 06.03.2000

(84) Designated Contracting States:
**AT BE CH CY DE DK ES FI FR GB GR IE IT LI LU MC NL PT SE**
Designated Extension States:
**AL LT LV MK RO SI**

(30) Priority: 04.03.1999 JP 5725799
25.05.1999 JP 14483699

(71) Applicant: **INOAC CORPORATION**
Nagoya-shi Aichi-ken (JP)

(72) Inventors:
• **Iwanaga, Kentaro,**
**Inoac Corporation**
**Anjyo-shi, Aichi (JP)**
• **Harada, Kentaro,**
**Inoac Corporation**
**Anjyo-shi, Aichi (JP)**
• **Suzuki, Hiroaki,**
**Inoac Corporation**
**Anjyo-shi, Aichi (JP)**

(74) Representative: **HOFFMANN - EITLE**
**Patent- und Rechtsanwälte**
**Arabellastrasse 4**
**81925 München (DE)**

(54) **Thermoplastic polyurethane elastomer for slush molding, thermoplastic polyurethane elastomer powder for slush molding and skin material using the same**

(57) A thermoplastic polyurethane elastomer for slush molding; a thermoplastic polyurethane elastomer for slush molding obtained by pulverizing the above thermoplastic polyurethane elastomer for slush molding; and a skin material obtained by using the thermoplastic polyurethane elastomer powder for slush molding and performing slush molding, are disclosed.

EP 1 033 379 A2

**Description**

FIELD OF THE INVENTION

This invention relates to a specific thermoplastic polyurethane elastomer to be used in, for example, molded skin materials for interior vehicle trims, etc. Moreover, the present invention relates to a thermoplastic polyurethane elastomer powder which is obtained by pulverizing the above-described elastomer and has a specific grain size distribution, and a skin material using the same.

In particular, the present invention relates to a thermoplastic polyurethane elastomer for slush molding which is useful in molded skin materials such as interior vehicle trims, for example, instrument panels provided with tear line for air bag expansion. The present invention further relates to a thermoplastic polyurethane elastomer powder which is obtained by pulverizing this elastomer and has a specific grain size, and a skin material using the same. This skin material is usable as various interior vehicle trims such as instrument panels, door trim uppers and pillar garnishes.

BACKGROUND OF THE INVENTION

Interior vehicle trims such as instrument panels are formed by joining a skin material to the surface of a resin base obtained by injection molding via a foamed urethane layer. This skin material should have a good appearance, be flaw-free, and be excellent in tolerance to light, heat, etc. As skin materials satisfying the above requirements, use has been made of polyvinyl chloride sheets or composite sheets produced by bonding foamed polypropylene sheets to the polyvinyl chloride sheets and shaping into a desired form by vacuum molding. There have been also known those obtained by using resin powders (polyvinyl chloride powder, etc.) and shaping into a desired form by slush molding.

To cope with the recent problems relating to environmental pollution (the evolution of dioxin, acid rain, etc.), there arises a tendency to use skin materials produced by vacuum-molding acrylonitrile/styrene/acrylate copolymer resin sheets. Also, there have been provided skin materials obtained by vacuum-molding polyolefin elastomer sheets optionally having foamed polypropylene sheets bonded thereto, thus taking measures to deal with the above problems by using substitute resin materials. From the viewpoint of design, on the other hand, slush molding is preferred to vacuum molding, since the former is excellent in emboss transfer and enables the production of high-quality skin materials. In these days, therefore, use has been frequently made of slush molding with the use of material resins causing little troubles of environmental pollution.

Studies have been made on polyolefin elastomers as material resins with little environmental pollution and some of these elastomers are appropriate for slush molding. However, skin materials made of these elastomers have a disadvantage, i.e., tending to be flawed. Although attempts have been made to overcome this problem of tending to be flawed by blending these elastomers with other components, the thus obtained compositions are too expensive and thus not usable in practice. On the other hand, acrylonitrile/styrene/acrylate copolymer resins are free from the problems of tending to be flawed and costing a great deal. However, skin materials produced by slush molding these copolymer resins are sometimes poor in moldability and appearance.

Recently, a number of vehicles are provided with airbags. For example, an airbag for the driver's seat is put within the instrument panel. On the instrument panel, a tear line is formed from which the airbag breaks out followed by expansion in case of necessity. To ensure rapid expansion of the airbag, this tear line is formed on the back of the instrument panel by laser bean machining, cutter pressing, etc. However, it is sometimes observed that the tear line becomes visible on the exterior part, thus deteriorating the appearance. When the depth of the tear line is reduced, it is feared that the sufficient expansion of the airbag cannot be achieved. Therefore, it has been required to develop a skin material which enables the formation of a tear line invisible from outside while ensuring the rapid expansion of an airbag.

JP-A-8-282420 discloses a technique whereby a groove of a definite depth is formed by laser beam machining on the back of an instrument panel to thereby provide a potential opening (the term "JP-A" as used herein means an "unexamined published Japanese patent application"). It is also stated in this patent to form the skin by the powder slush molding method. However, a vinyl chloride resin containing about 40% by weight of a plasticizer is employed in the powder slush molding. Thus, there arise some problems such as embrittlement of the resin and shrinkage of the instrument panel as the plasticizer is vaporized with the passage of time. In addition, the face provided with the possible opening sometimes undergoes cracking, thus deteriorating the appearance. If the resin becomes brittle, moreover, it is feared that the resin would scatter upon the expansion of the airbag.

SUMMARY OF THE INVENTION

One object of the present invention, which has been made to overcome the above-described problems, is to provide a thermoplastic polyurethane elastomer which has specific viscoelastic properties or thermal properties and is appropriate for slush molding.

Another object of the present invention is to provide a thermoplastic polyurethane elastomer powder which is obtained by pulverizing the above thermoplastic polyurethane elastomer, has a specific grain size distribution within a narrow scope, and is appropriate for slush molding, and a skin material using the same.

Moreover, the present invention, which has been made to overcome the above-described problems, aims at providing a thermoplastic polyurethane elastomer which has a specific degree of crosslinking or thermal properties and is useful particularly in forming a skin material for interior vehicle trims (for example, an instrument panel provided with a tear line for airbag expansion) by the slush molding method.

The present invention also aims at providing a thermoplastic polyurethane elastomer powder which is obtained by pulverizing the above thermoplastic polyurethane elastomer, has a specific grain size distribution, and is appropriate for slush molding, and a skin material using the same.

The first aspect of the present invention has been completed based on the finding that a skin material having a good moldability and a good appearance (i.e., being free from pinhole, etc.) can be obtained by processing a thermoplastic polyurethane elastomer (hereinafter referred to as "TPU") at a shear rate within a narrow scope as, in particular, in the slush molding method while sustaining a specific relation between temperature and dynamic viscosity and maintaining the viscosity at a low level around the molding temperature.

The thermoplastic polyurethane elastomer for slush molding according to the first aspect of the present invention shows a difference $(T_2-T_1)$ of 20°C or less, wherein $T_1$ means the temperature at which its dynamic viscosity attains $5 \times 10^4$ poise; and $T_2$ means the temperature at which its dynamic viscosity attains $1 \times 10^4$ poise, and a dynamic viscosity of $6 \times 10^3$ poise or less at 220°C, when the dynamic viscoelasticity is measured at a frequency of 1 Hz.

The second aspect of the present invention has been completed based on the finding that when a TPU, which has been adequately crosslinked and has a specific high average molecular weight of the uncrosslinked molecule, is processed at a shear rate within a narrow scope as, in particular, in the slush molding method and a tear line for airbag expansion is formed on, for example, a vehicle instrument panel by laser bean machining, etc., the TPU shows a good moldability and the tear line thus formed remains invisible on the designed face.

The thermoplastic polyurethane elastomer for slush molding according to the second aspect of the present invention contains 10% by weight or more of tetrahydrofuran-insoluble matters and tetrahydrofuran-soluble matters having a number-average molecular weight of 30,000 or more, after the completion of the crosslinking due to the heat in the molding step.

## BRIEF DESCRIPTION OF THE DRAWINGS

In the accompanying drawings,

Fig. 1 is a chart showing the results of the measurement of the viscoelastic properties of the TPU of Example 3 with a rheometer;
Fig. 2 is a chart showing the results of the measurement of the thermal properties of the TPU of Example 3 with a differential scanning calorimeter;
Fig. 3 is a graph schematically showing the correlationship between temperature and viscosity of a TPU for slush molding which can undergo crosslinking due to the heat in the molding step;
Fig. 4 is a chart showing the temperature-lowering curve of the TPU of Example 10 measured with a differential scanning calorimeter;
Fig. 5 is a perspective view of the appearance of an instrument panel in the seat side provided with a tear line for airbag expansion; and
Fig. 6 is a sectional view schematically showing the cross section of the tear line.

## DETAILED DESCRIPTION OF THE INVENTION

In the first aspect of the present invention, the temperatures $T_2$ and $T_1$ both fall within the scope wherein TPU is under melting and thus its viscosity is in the course of decreasing. Thus, the fact that the difference in temperature $(T_2-T_1)$ at a definite difference in viscosity is "20°C or less" means that the viscosity is largely decreased with an increase in temperature. When such a TPU is employed, the TPU is quickly molten around the surface of a mold and thus adheres to the mold in a sufficient amount. On the other hand, the TPU apart from the mold surface is not softened or molten but taken up in a container. Thus, a skin material having a uniform thickness, an excellent appearance, a good texture, etc. can be thus obtained. It is preferable that the temperature difference is 15°C or less, still preferably 12°C or less (usually 5°C or more), since a skin material having particularly favorable appearance, etc. can be thus obtained.

When the temperature difference exceeds 20°C, the molding time tends to be prolonged. As a result, the molded article thus obtained is liable to contain air bubbles therein and the air remains in the skin material as such even though after shaping. In this case, moreover, the TPU begins to be molten not only around the surface of a mold but also apart from the surface of a mold and thus fails to adhere to the mold surface. The TPU to be collected into a container is partly softened and thus aggregates thereof are formed. When the thus collected TPU is reused, these aggregates are not quickly molten but cause disadvantages such as pinhole formation.

When the dynamic viscosity of the TPU at 220°C (i.e., the temperature at which the TPU is completely molten) exceeds $6 \times 10^3$ poise, the TPU shows a low fluidity and a poor moldability after slush molding, which makes it impossible to obtain a skin material having a uniform thickness. In this case, moreover, there arise other problems such as the formation of pinholes, which makes it impossible to obtain a skin material being excellent in appearance or texture.

Studies on the factors required in slush molding TPUs have revealed that a highly uniform coating film having a good moldability can be obtained by using a TPU which is crystallized at a relatively high temperature in the cooling process from the molten state and shows a calorific value at a certain level or higher in association with the crystallization, i.e., a TPU having a considerably high degree of crystallization. The present invention has been completed based on this finding.

The thermoplastic polyurethane elastomer for slush molding according to the present invention preferably shows a calorific value expressed in the exothermic peak area of 6 mJ/mg or more and an exothermic peak temperature of 100°C or above, when the differential scanning calorie is measured in the cooling process after melting.

The differential scanning calorie is measured in the cooling process, since the formation of hydrogen bond and the degree of crystallinity can be definitely clarified thereby, compared with the case of the heating process. The above-described "calorific value" expressed in the exothermic peak area means the calorie required in the solidification of the molten TPU. When this calorific value is less than 6 mJ/mg, the TPU has not been sufficiently crystallized. In such a case, the TPU has a deteriorated moldability and thus no skin material with a uniform thickness can be obtained therefrom. When the calorific value is 8 mJ/mg or more (usually not more than 20 mJ/mg), the moldability is improved and a skin material having a good appearance, etc. can be obtained.

The above-described "exothermic peak" means the peak of the exothermic temperature at which the molten TPU is crystallized again with a decrease in temperature. When this exothermic peak is lower than 100°C, the TPU has not been sufficiently crystallized due to some factors inhibiting the crystallization, for example, having a high molecular weight, having a considerably largely crosslinked structure, or having a bulky substituent. In such a case, the TPU is poor in moldability and thus fails to give a skin material with a uniform thickness. When the peak temperature is 100°C or higher, preferably 105 °C or higher (usually not higher than 125°C), the aggregation of the TPU can be fully prevented and the moldability of the TPU is improved, thereby giving a skin material with excellent appearance. Moreover, the shape is retained as such without deformation after mold-releasing. Even though the peak temperature is lower than 100°C, the aggregation of the TPU can be prevented by lowering the molding temperature.

A TPU consists fundamentally of a polymer polyol forming a soft segment and an urethane group forming a hard segment. For example, citation may be made of a TPU prepared by a polyaddition reaction (urethane-forming reaction) between an adipate type polyester polyol having hydroxyl groups at both ends, which is obtained by condensing an adipic acid with 1,4-butanediol, and hexamethyelne diisocyanate which is a short-chain diisocyanate. Among these TPUs, those which have a linear molecular structure, can be easily aligned, have many urethane bonds per molecule, have a large bonding strength due to hydrogen bond, and have no excessively crosslinked structure can be quickly molten to achieve a high crystallinity. Such TPUs for slush molding can be produced in the following manner.

A TPU for slush molding can be produced by reacting a polyisocyanate component with a polyol component. In practice, use is made of urethane polymerization catalysts, chain extenders (short-chain diols, etc.), trifunctional or higher polyols, polyisocyanates, etc. in addition to the above-described polyisocyanate and polyol components.

It is preferable that the equivalent ratio (NCO/OH) of the isocyanate (NCO) groups in the polyisocyanate and the hydroxyl (OH) groups in the polyol ranges from 0.95 to 1.05, preferably from 0.95 to 1.02 and more preferably from 0.95 to 1.00.

When the NOC/OH ratio is less than 0.95, the moldability in the slush molding is improved but the chemical resistance, etc. of the obtained skin material are deteriorated. When this ratio exceeds 1.05, on the other hand, the degree of crosslinking of the TPU is excessively elevated due to allophanate bond, burette bond, etc. and thus the moldability is deteriorated. When a polymerization catalyst is employed in a large amount, it is sometimes observed that the NCO groups are consumed by the side-reaction and the amount of NCO groups which do not contribute to the urethane-formation is increased, even at a high NCO/OH ratio. In such a case, the molecular weight is not elevated and thus the deterioration in the moldability can be prevented.

The polyisocyanate is not restricted in type. Examples thereof include diphenylmethane diisocyanate (MDI), hydrogenated MDI, isophorone diisocyanate (IPDI), etc., in addition to the HDI as described above. Among all, HDI, MDI and hydrogenated MDI, each having a symmetric molecular structure, are particularly favorable. By using an isocyanate-ended prepolymer having isocyanate groups at both ends, it is possible to enhance the hydrogen bonding strength of the hard segment or to grow the crystalline phase.

As the polyol, use can be made of polycondensed polyester polyols as well as polyester polyols obtained by ring opening polymerization of cyclic esters such as ε-caprolactone, polyether polyols obtained by ring opening polymerization of cyclic ethers, polyether ester polyols obtained by copolymerizing these polyols, etc. It is also possible to use polymer polyols such as polycarbonate polyols having carbonate group. It is further possible to use these polyols together with monomer polyols such as 1,4-butanediol.

The polymer polyol usually has a number-average molecular weight of from 500 to 10,000, preferably from 500 to 4,000, most preferably from 1,000 to 3,000 though the present invention is not restricted thereto. When it has an excessively high number-average molecular weight, the content of the soft segment is increased while the hard segment is decreased. As a result, the crystallinity is lowered. In this case, moreover, the TPU exhibits vigorous molecular movements before heating in the molding step and thus its viscosity is little changed in the molten state. For these reasons, it is sometimes impossible to obtain a TPU having a good moldability. When the number-average molecular weight is excessively low, on the other hand, the content of the hard segment is increased and the elastomer becomes hard, which sometimes makes it impossible to give a skin material being excellent in appearance, texture, etc.

By using a monomer polyol together with the polymer polyol, the hard segment can be partly grown in the molecular chain and thus the crystallinity can be elevated. When the monomer polyol is employed in an excessively large amount, however, the crystallization proceeds excessively or the content of the hard segment is undesirably increased, thus making the elastomer too hard. Thus, care should be paid to this point. On the other hand, it is sometimes observed that the polyester polyol is bonded to urethane bond via a hydrogen bond and thus the soft segment is prolonged. As a result, the hard segment becomes relatively shorter and the crystallinity is lowered. As discussed above, the composition ratio of the hard segment to the soft segment of the elastomer is affected by a number of factors. Although the crystallinity can be lowered and the decrease in the viscosity in the molding step can be restrained by using a trifunctional or higher polyisocyanate and/or polyol, the content of such component(s) should be controlled to 5% by mol or less in order to achieve the object of the first aspect of the present invention. To obtain a TPU having the desired properties, it is therefore favorable to fully discuss the functions, effects, etc. of the composition of the materials.

In addition to the polyisocyanate and the polyol employed as the main components, the elastomer may further contain various additives. These additives are preliminarily blended with the polyol and then mixed with the polyisocyanate as the polyol component in many cases. These additives are exemplified by liquid plasticizers (phthalates, trimellitates, etc.) capable of regulating the decrease in the molten viscosity of the elastomer materials in the molding step. It is preferable to use such a plasticizer in an amount of 20 parts (by weight, the same will apply hereinafter) or less, still preferably 15 parts or less, per 100 parts of the materials. It is undesirable to use the plasticizer in an amount exceeding 20 parts, since the plasticizer sometimes bleeds out on the surface of a skin material made of the thus obtained elastomer.

It is also possible to add inorganic fillers (talc, calcium carbonate, silica, etc.) to the elastomer so as to elevate the rigidity of the elastomer or to improve the pulverizing performance thereof in the step of, for example, frozen pulverization. Thus, the pulverization yield can be elevated. It is preferable that such an inorganic filler is used in an amount of 40 parts or less, still preferably 30 parts or less, per 100 parts of the materials. It is undesirable to use the inorganic filler in an amount exceeding 40 parts, since the resultant elastomer has a deteriorated moldability and poor appearance and texture. Moreover, the surface of a skin material made thereof becomes too hard in some cases.

The above-described "TPU powder for slush molding" can be obtained by pulverizing TPU pellets by an appropriate method, for example, mechanical pulverization or solution pulverization. It is particularly preferable to employ the frozen pulverization method therefor, since a powder being more uniform in shape, size, etc. can be thus obtained by pulverizing the TPU powder at a lower temperature. Alternatively, the powder can be prepared by reducing the pore size of the die nozzle orifice to give fine pellets in the step of pellet formation.

The grain size distribution of a powder largely affects the fluidity thereof. When the grain size distribution is too broad, namely, the moldability is deteriorated and it becomes impossible to give a skin material being free from pinhole and having a uniform thickness. As to the grain size distribution, it is preferable that 80% by weight or more of the grains pass through a 42-mesh Taylor's standard sieve but not a 150-mesh Taylor's standard sieve. By using a powder having such a narrow grain size distribution, a pin-hole-free skin material having a uniform thickness can be produced.

The fluidity of the powder can be further improved by adding a definite amount of inorganic grains having a grain size of 5 μm or less (for example, fine silica grains) after pulverizing the pellets. It is also possible to use additives such as antioxidants, ultraviolet absorbers, hindered amine-type photostabilizers, etc. to thereby improve the photoresistance, heat resistance, durability, etc. of the TPU powder. It is also possible to add mold-releasing agents (stearic acid bisamide, etc.) to thereby facilitate the mold-releasing.

In the second aspect of the present invention, the above-described "TPU powder for slush molding" is crosslinked due to the heat in the step of slush molding. The degree of crosslinking is expressed in the content of tetrahydrofuran-insoluble matters (hereinafter referred to as "THF-insoluble matters"). When the content of THF-insoluble matters is less than 10% by weight, the TPU is liable to be molten by heating. When a tear line for airbag expansion is to be formed by, for example, laser beam irradiation, the skin material is molten around the definite site and thus no processing with a high dimensional accuracy can be established. When the number-average molecular weight of the tetrahydrofuran-soluble matters (hereinafter referred to as "THF-soluble matters") is less than 30,000, the skin material is liable to be molten by heating and no fine laser beam machining with a high dimensional accuracy can be established too.

The content of the THF-insoluble matters is preferably 12% by weight or more, still preferably 15% by weight or more. The number-average molecular weight of the THF-soluble matters is preferably 35,000 or more, still preferably 40,000 or more. When the solvent resistance of the TPU against ethanol, etc. is taken into consideration, it is still preferable that the number-average molecular weight of the THF-soluble matters is 50,000 or more. When the content of the THF-insoluble matters and the number-average molecular weight of the THF-soluble matters fall respectively within the scopes as defined above, fine laser beam machining with an elevated dimensional accuracy can be established. It is particularly preferable that the content of the THF-insoluble matters is 40% by weight or less, still preferably 35% by weight or less. When the content of the THF-insoluble matters exceeds 40% by weight (i.e., the crosslinking proceeding excessively), the obtained skin material is poor in the processability. In this case, moreover, expensive compounds should be used in a large amount to introduce the crosslinked structure, which results in an undesirable increase in the cost of the TPU.

In the second aspect of the present invention, it is preferable that the TPU for slush molding shows a calorific value expressed in the exothermic peak area of 5 mJ/mg or less, still preferably 3 mJ/mg or less, when the differential scanning calorie is measured in the cooling process after melting. The fact that the calorific value exceeds 5 mJ/mg means that the TPU has not been sufficiently crosslinked and the uncrosslinked chain molecule has a high crystallinity. Such a TPU for slush molding is not favorable, since it is liable to be molten by heating and thus sometimes unusable in fine laser beam machining at a high dimensional accuracy.

A TPU consists fundamentally of a polymer polyol forming a soft segment and an urethane group forming a hard segment. For example, citation may be made of a TPU prepared by a polyaddition reaction (urethane-forming reaction) between an adipate type polyester polyol having hydroxyl groups at both ends, which is obtained by condensing an adipic acid with 1,4-butanediol, and hexamethyelne diisocyanate (HDI) which is a short-chain diisocyanate. In the second aspect of the present invention, an adequate crosslinked structure has been introduced into such a TPU.

In addition to the polyisocyanate and polyol commonly employed in forming TPUs, the TPU for slush molding may contain chain extenders, blocked isocyanates, urethodione group-containing polyisocyanate derivatives or mixtures thereof so as to perform crosslinking. Alternatively, the crosslinked structure can be formed by reacting the polyisocyanate regenerated due to the heat in the step of the slush molding with active hydrogen or functional groups (urethane, urea, etc.) in the chain molecule. To quickly melt the TPU, on the other hand, it is preferable that the TPU has no excessive crosslinked structure; the molecules in the uncrosslinked part thereof have a linear structure and thus can be easily aligned; the TPU carries many urethane bonds per molecule; and a large bonding strength is established by hydrogen bonds.

As examples of a TPU for slush molding which can be quickly molten, citation may be made of those showing a difference $(T_2-T_1)$ of 20°C or less, preferably 15°C or less and still preferably 12°C or less and usually not less than 5°C (wherein $T_1$ means the temperature at which its dynamic viscosity attains $5 \times 10^4$ poise; and $T_2$ means the temperature at which its dynamic viscosity attains $1 \times 10^4$ poise), and a dynamic viscosity of $6 \times 10^3$ poise or less at 220°C, when the dynamic viscoelasticity is measured at a frequency of 1 Hz.

The temperatures $T_2$ and $T_1$ both fall within the scope wherein TPU is under melting and thus its viscosity is in the course of decreasing. Thus, the fact that the difference in temperature $(T_2-T_1)$ at a definite difference in viscosity is "20°C or less" means that the viscosity is quickly decreased with an increase in temperature and then increased owing to crosslinking. When such a TPU is employed, the TPU is quickly molten around the surface of a mold and thus adheres to the mold in a sufficient amount. On the other hand, the TPU apart from the mold surface is not softened or molten but taken up in a container. Subsequently, the crosslinking proceeds to give a TPU which is not easily molten by heating. Thus, a skin material having a uniform thickness, an excellent appearance, a good texture, etc. can be thus obtained. In particular, the thus obtained skin material is free from any failure in the appearance of thinner parts and thus usable in fine laser beam machining, etc. at a high dimensional accuracy.

When the temperature difference exceeds 20°C, thickening due to crosslinking begins before the viscosity is sufficiently lowered. In such a case, the molding time tends to be prolonged. As a result, the molded product thus obtained is liable to contain air bubbles therein and the air remains in the skin material as such even though after shaping. In this case, moreover, the TPU begins to be molten not only around the surface of a mold but also apart from the surface of a mold and thus fails to adhere to the mold surface. The TPU to be collected into a container is partly softened and thus aggregates thereof are formed. Since the molding time is prolonged, crosslinking also proceeds and, in its turn, the thus collected TPU cannot be reused in some cases. Even though the TPU can be reused, it cannot be molten quickly and cause some troubles such as pinhole formation.

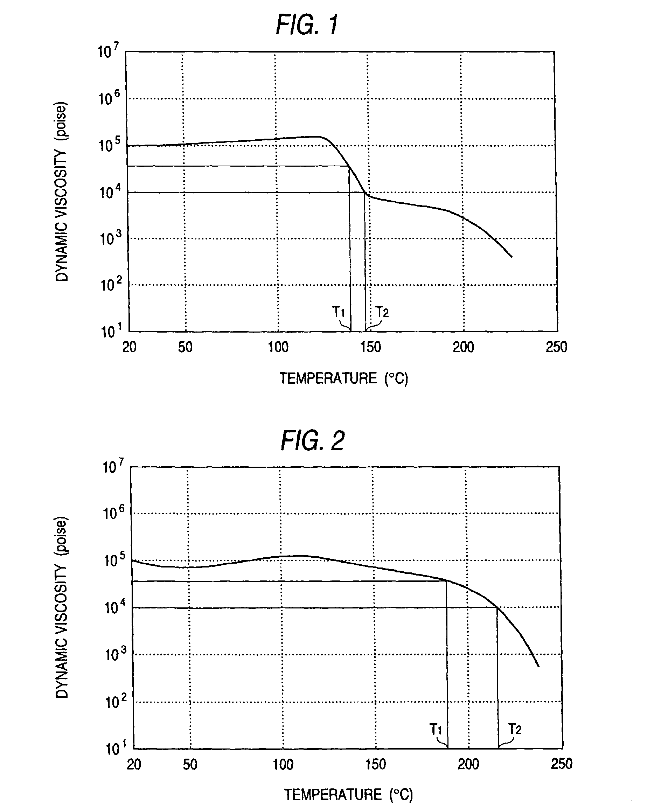

Fig. 1 schematically shows the correlationship between temperature and viscosity of the TPU for slush molding according to the present invention. With an increase in the temperature, the viscosity is gradually decreased. When the temperature attains a certain level, the viscosity shows a rapid decrease. When the temperature reaches the point C given in Fig. 1, crosslinking begins associated with an increase in the viscosity. As Fig. 1 shows, the region from the temperature at which the lowest viscosity is observed to the point at which the viscosity is somewhat increased due to crosslinking is referred to as the temperature range appropriate for slush molding.

The polisocyanate and the polyol to be used in the production of the TPU are as described above.

The polymer polyol usually has a number-average molecular weight of from 500 to 10,000, preferably from 500 to 4,000, and most preferably from 1,000 to 3,000 though the present invention is not restricted thereto. When it has an excessively high number-average molecular weight, the content of the soft segment is increased while the hard segment is decreased. As a result, the crystallinity is lowered. In this case, moreover, the TPU exhibits vigorous molecular movements before heating in the molding step and thus its viscosity is little changed in the molten state. For these reasons, it is sometimes impossible to obtain a TPU having a good moldability. When the number-average molecular weight is excessively low, on the other hand, the content of the hard segment is increased and the elastomer becomes hard, which sometimes makes it impossible to give a skin material being excellent in appearance, texture, etc.

By using a monomer polyol together with the polymer polyol, the hard segment can be partly grown in the molecular chain and thus the crystallinity can be adequately elevated. When the monomer polyol is employed in an excessively large amount, however, the crystallization proceeds excessively or the content of the hard segment is undesirably increased, thus making the elastomer too hard. Thus, care should be paid to this point. On the other hand, it is sometimes observed that the polyester polyol is bonded to urethane bond via a hydrogen bond and thus the soft segment is prolonged. As a result, the hard segment becomes relatively shorter and the crystallinity is lowered. As discussed above, the composition ratio of the hard segment to the soft segment of the elastomer is affected by a number of factors.

It is preferable that the equivalent ratio (NCO/OH) of the isocyanate (NCO) groups in the polyisocyanate and the hydroxyl (OH) groups in the polyol ranges from 0.95 to 1.05, preferably from 0.95 to 1.02 and more preferably from 0.95 to 1.00.

When the NCO/OH ratio is less than 0.95, the moldability in the slush molding is improved but the chemical resistance, etc. of the obtained skin material is deteriorated. When this ratio exceeds 1.05, on the other hand, the degree of crosslinking of the TPU is excessively elevated due to allophanate bond, burette bond, etc. and thus the moldability is deteriorated. It is to be understood that the NCO/OH ratio as used herein does not include blocked isocyanate.

In addition to the polyisocyanate and the polyol employed as the main components, the elastomer may further contain various additives. These additives are preliminarily blended with the polyol and then mixed with the polyisocyanate as the polyol component in many cases. These additives are exemplified by trifunctional or higher polyisocyanates and/or polyols by which the crystallinity of the elastomer can be lowered or the decrease in the viscosity thereof can be regulated in the step of molding. To achieve the objects of the present invention, the contents of these additives should be appropriately controlled.

It is also possible to add thereto liquid plasticizers (phthalates, trimellitates, etc.) capable of decreasing the molten viscosity of the elastomer materials in the molding step. It is preferable to use such a plasticizer in an amount of 20 parts (by weight, the same will apply hereinafter) or less, still preferably 15 parts or less, per 100 parts of the materials. It is undesirable to use the plasticizer in an amount exceeding 20 parts, since the plasticizer sometimes bleeds out on the surface of a skin material made of the thus obtained elastomer.

It is also possible to add inorganic fillers (talc, calcium carbonate, silica, etc.) to the elastomer so as to elevate the rigidity of the elastomer or to improve the pulverizing performance thereof in the step of, for example, frozen pulverization. Thus, the pulverization yield can be elevated. It is preferable that such an inorganic filler is used in an amount of 40 parts or less, still preferably 30 parts or less, per 100 parts of the materials. It is undesirable to use the inorganic filler in an amount exceeding 40 parts, since the resultant elastomer has a deteriorated moldability and a skin material made thereof has poor appearance and texture. Moreover, the surface of the skin material becomes too hard in some cases.

It is also possible to improve the water resistance of the TPU by preparing a polymer alloy thereof with a hydrophobic resin. As the hydrophobic resin, use can be made of polyolefins such as polyethylene and polypropylene. Also, a polymer alloy can be prepared by using an ethylene-$\alpha$-olefin copolymer rubber, a styrene-ethylene-butylene-styrene (SEBS) copolymer rubber, etc. Since these resins and rubbers are incompatible with TPU as such, it is necessary to introduce polar groups (carboxyl, etc.) thereinto before using. To prepare an alloy, it is preferable to use the resin or rubber in an amount of 30 parts or less, still preferably 20 parts or less, per 100 parts of the materials. It is not preferable that the content thereof exceeds 30 parts, since the flaw resistance of the skin material obtained therefrom is sometimes deteriorated.

To obtain a TPU having the desired characteristics as described above, it is preferable to fully discuss the functions, effects, etc. of the polyisocyanate and the polyol employed as the main components as well as additional components (plasticizers, inorganic fillers, resins and rubbers for preparing alloy, etc.).

It is preferable that the "TPU powder for slush molding" according to the present invention is obtained by pulverizing the thermoplastic polyurethane elastomer for slush molding as described above. The TPU powder is characterized in that at least 80% by weight of the grains pass through a 42-mesh Taylor's standard sieve.

The above-described "TPU powder for slush molding" can be obtained by pulverizing TPU pellets by an appropriate method, for example, mechanical pulverization or solution pulverization. It is particularly preferable to employ the frozen pulverization method therefor, since a powder being more uniform in shape, size, etc. can be thus obtained by the pulverization at a low temperature. Alternatively, the powder can be prepared by reducing the pore size of the die nozzle orifice to give fine pellets in the step of pellet formation.

The grain size distribution of a powder largely affects the fluidity thereof. When the powder contains many coarse grains or its grain size distribution is too broad, namely, the moldability is deteriorated and it becomes impossible to give a skin material being free from pinhole and having a uniform thickness. Regarding the grain size distribution, it is preferable that 80% by weight or more of the grains pass through a 42-mesh Taylor's standard sieve and little pass through a 150-mesh Taylor's standard sieve. By using a powder having such a narrow grain size distribution, a pinhole-free skin material having a uniform thickness can be produced.

The fluidity of the powder can be further improved by adding a definite amount of inorganic grains having a grain size of 5 μm or less (for example, fine silica grains) after pulverizing the pellets. It is also possible to use additives such as antioxidants, ultraviolet absorbers, hindered amine-type photostabilizers, etc. to thereby improve the photoresistance, heat resistance, durability, etc. of the TPU powder. It is also possible to add mold-releasing agents (stearic acid bisamide, etc.) to thereby facilitate the mold-releasing.

By using the TPU powder for slush molding according to the present invention, a skin material can be obtained by the slush molding method.

This skin material is made of a TPU which has been adequately crosslinked and has a high number-average molecular weight in the uncrosslinked parts. It is scarcely molten by heating and, therefore, usable in fine laser beam machining, etc. at a high dimensional accuracy. Owing to these characteristics, it is useful particularly in interior vehicle trims such as an instrument panel on which a tear line for air bag expansion is formed.

The present invention will be described in greater detail by reference to the following Examples.

(1) Preparation of TPU

EXAMPLES 1 TO 5

As the polyisocyanate, use was made of isocyanate-ended prepolymers having isocyanate groups at both ends obtained by polycondensation of HDI or MDI with short chain diols (1,4-butanediol, neopentyl glycol, etc.). As the polyol, use was made of adipate type polyester polyols having a number-average molecular weight of from 2,000 to 4,000. The NCO/OH ratio ranged from 0.96 to 1.03. As an urethane polymerization catalyst, dibutyltin dilaurate was used in an amount of 100 to 200 ppm based on the total feedstock materials. In some of the Examples, a triisocyanate compound having isocyanurate rings (i.e., a trimer obtained by cyclizing HDI) was employed as a crosslinking agent in an amount of less than 5% by mol expressed in the ratio to the whole NCO. Specific preparation conditions of each of the Examples are summarized in the following tables.

Preparation of TPU in Examples 1 to 5

| | Example 1 | Example 2 | Example 3 | Example 4 | Exmaple 5 |
|---|---|---|---|---|---|
| Kind of Isocyanate | MDI | HDI | HDI | MDI | MDI |
| Process for Production | One-shot process | Prepolymer process | One-shot process | One-shot process | One-shot process |
| $M_n$ of Polyol | 2000 | 2000 | 2000 | 2000 | 2000 |
| NCO/OH Ratio | 0.99 | 0.99 | 0.98 | 1.02 | 0.96 |
| Amount of Catalyst (ppm) | 100 | 100 | 200 | 100 | 200 |
| Amount of Triisocyanate (mol %) | 0 | 0 | 0 | 0 | 0 |

These components were mixed and reacted to give TPUs having the viscoelastic properties and thermal properties as listed in Table 1.

EXAMPLES 6 TO 9

To the TPU of Example 1 were added trioctyl trimellitate (TOTM) as a plasticizer and calcium carbonate as an inorganic filler. After kneading, TPU compositions having the viscoelastic properties and thermal properties as listed in Table 2 were obtained. The amounts of the additives given in Table 2 are expressed by referring the amount of the TPU as to 100 parts.

(2) Evaluation of viscoelastic properties and thermal properties

The viscoelastic properties and the thermal properties of the TPUs obtained in (1) were evaluated in the following manner.

(a) Viscoelastic properties

Device: Model RDA-700 manufactured by Rheometrix.
Measuring conditions: By using DISK PLATE mode, temperature was elevated from 25 to 220°C at a rate of 3°C/min at 1 Hz under a strain load of 1% (low shear speed).

In the measurement of the viscoelastic properties, a sample was prepared by pressing a TPU between two disk plates (diameter: 20 mm) under heating at 230°C. Although the sample had a thickness of about 3 mm, this thickness was corrected in the course of the calculation of the dynamic viscosity. Namely, the dynamic viscosity is not affected by the thickness of the sample.

(b) Thermal properties

Device: Model SSC5200 manufactured by Seiko Electronics.
Measuring conditions: A sample was molten by heating to 250°C and then cooled at a rate of 10°C/min.

(3) Evaluation of melting properties and pinhole formation

By using a sample prepared by pulverizing the TPU obtained in the above (1), a skin material of about 800 μm in thickness was produced by the molding method with the use of a slush mold for instrument panels the surface temperature of which had been controlled to 220 or 240°C. Then, this skin material was evaluated in the melting properties and pinhole formation. Tables 1 and 2 show the results.

(a) Melting properties

In the slush molding step, the molten state was observed with the naked eye.

Criteria:     A: Moldable at 220°C to give a skin material having a desired shape and a uniform thickness.
              B: Although moldable at 240°C, the obtained skin material being poor in the smoothness of the back face and somewhat irregular in thickness.
              C: Not sufficiently molten at 240°C and the obtained skin material being poor in the smoothness of the back face and largely irregular in thickness.

(b) Pinhole formation

The obtained skin materials were observed with the naked eye to evaluate the presence/absence of pinholes on the flat faces and edges.

Criteria:     A: No pinhole.

B: Small pinholes detectable exclusively through a magnifying glass.
C: Large pinholes and through holes.

TABLE 1

| | | Example | | | | |
|---|---|---|---|---|---|---|
| | | 1 | 2 | 3 | 4 | 5 |
| Physical data | $\eta'$ (220°C) (poise) | 2000 | 1300 | 900 | 5500 | <300 |
| | $T_2$-$T_1$ (°C) | 13 | 11 | 9 | 17 | 7 |
| | $\Delta H$ (mJ/mg) | 10.6 | 9.6 | 9.6 | 10.0 | 11.4 |
| | Peak temp. (°C) | 115 | 108 | 112 | 124 | 94 |
| Moldability | Melting properties | A | A | A | B | A |
| | Pinhole formation | A | A | A | B | A |

TABLE 2

| | | Example | | | |
|---|---|---|---|---|---|
| | | 6 | 7 | 8 | 9 |
| Additive | TOTM (parts) | 5 | 10 | - | - |
| | CaCO$_3$ (parts) | - | - | 20 | 30 |
| Physical data | $\eta'$ (220°C) (poise) | 1700 | 1000 | 4000 | 5500 |
| | $T_2$-$T_1$ (°C) | 12 | 17 | 14 | 15 |
| | $\Delta H$ (mJ/mg) | 9.8 | 9.0 | 8.5 | 7.3 |
| | Peak temp. (°C) | 112 | 109 | 117 | 118 |
| Moldability | Melting properties | A | A | A | A |
| | Pinhole formation | A | A | A | A |

As the results given in Table 1 show, the TPUs falling within the scope of the present invention are quickly molten and the skin materials obtained from these TPUs are free from pinhole. Although small pinholes are observed in Example 4 wherein the dynamic viscosity at 220°C is a little high and thus the melting properties are somewhat poor, the obtained skin material is sufficiently usable in practice. The TPU of Example 5 is quickly molten at a relatively low molding temperature (220°C) and the skin material obtained therefrom is free from pinhole and appropriate for slush molding.

The results given in Table 2 indicate that the TPU compositions of Examples 6 and 7 containing an appropriate amount of the plasticizer and the TPU compositions of Examples 8 and 9 containing an appropriate amount of the inorganic filler, which show some changes in the dynamic viscosity, calorific value, etc. depending on the contents of these additives but fall within the scope of the present invention, are each molten quickly and the skin materials obtained therefrom are free from any pinhole.

(4) Charts showing the viscoelastic properties and thermal properties of Example 3 and illustration thereof

(a) Example 3

Fig. 1 is a rheometric chart showing the results of the measurement of the viscoelastic properties of the TPU of Example 3. As Fig. 1 shows, this TPU is quickly molten within the specific viscosity range too and shows a considerably low viscosity (900 poise) at 220°C. Thus, it is estimated that this TPU can be easily molded at around this temperature and a skin material excellent in the appearance, etc. can be obtained therefrom. Fig. 2 is a difference scanning calorimetric chart showing the results of the measurement of the thermal properties of the TPU of Example 3. According to Fig. 2, the TPU shows a sufficiently high melting peak and an appropriate calorific value. It is therefore estimated that this TPU has an adequate crystallinity for slush molding. The TPU for slush molding according to the present invention is excellent in the moldability and shows no aggregation in the step of molding. Thus, a pinhole-free skin material having a god appearance can be produced therefrom. In the step of mold-releasing, moreover, the TPU can retain its shape without deformation. In addition, it can be pulverized to give the TPU powder for slush molding according to the present invention which has excellent properties and a specific grain size distribution. By using this powder, a skin material having a uniform thickness, a good appearance, etc. can be easily produced.

Moreover, the moldability of the TPU can be estimated by measuring its viscoelastic and thermal properties without performing slush molding in practice, which makes it very easy to select appropriate materials. In addition, the molecular structure of the TPU can be estimated depending on the viscoelastic and thermal properties thereof. Thus, physical properties required in skin materials (durability such as photoresistance and heat resistance, fogging resistance, chemical resistance, etc.) can be estimated therefrom. Thus, the TPU of the present invention is highly useful in slush molding.

(5) Preparation of TPU

EXAMPLES 10 TO 12

As the polyisocyanate, use was made of isocyanate-ended prepolymers having isocyanate groups at both ends obtained by polycondensation of HDI or IPDI with short chain diols (1,4-butanediol, neopentyl glycol, etc.). As the polyol, use was made of adipate type polyester polyols having a number-average molecular weight of 2,000. The NCO/OH ratio ranged from 0.94 to 0.99. As an urethane polymerization catalyst, dibutyltin dilaurate was used in an amount of 100 ppm based on the total feedstock materials.

A polyisocyanate derivative having urethodione group was employed in a definite amount. These components were mixed and reacted to give crosslinked TPUs. Specific preparation conditions of each of the Examples are summarized in the following tables.

Preparation of TPU in Examples 10 to 12

| | | Example 10 | Example 11 | Example 12 |
|---|---|---|---|---|
| Preparation of preliminary TPU | Kind of Isocyanate | HDI/IPDI* | IPDI | IPDI |
| | Process for Production | Prepolymer process | One-shot process | One-shot process |
| | $M_n$ of Polyol | 2000 | 2000 | 2000 |
| | NCO/OH Ratio | 0.97 | 0.96 | 0.96 |
| | Amount of Catalyst (ppm) | 100 | 100 | 100 |
| | Amount of Triisocyanate (mol%) | 2 | 2 | 2 |
| Addition Amount of Urethodione group-containing Polyisocyanate Derivative (parts by weight per 100 parts by weight of preliminary TPU) | | 15 | 10 | 10 |

*: HDI was first used at the preparation of prepolymer to obtain a isocyanate-ended prepolymer and then the obtained prepolymer was mixed with polymer polyol and IPDI

Table 3 shows the contents of the THF-insoluble matters, the number average molecular weights of the THF-soluble matters and the calorific values in the cooling process of these products.

TABLE 3

|  | Example | | |
|---|---|---|---|
|  | 10 | 11 | 12 |
| THF-insoluble matters (%) | 22 | 13 | 11 |
| Mn of THF-soluble matters | 50000 | 43000 | 31000 |
| Calorific value (mJ/mg) | 0.2 | 0.2 | 4.6 |
| Appearance | A | A | A-B |

(6) Evaluation of TPU

The content of the THF-insoluble matters, the number-average molecular weight of the THF-soluble matters and the calorific value listed in Table 3 were determined by the following methods.

(a) Content of THF-insoluble matters

A sheet of 0.8±0.1 mm in thickness was formed and cut into pieces (about 3x3 mm). About 3 g of these pieces were weighed and introduced into a cylindrical filter paper having a hole size of 8 $\mu$m diameters. Next, it was set into a Soxhlet extractor and extracted with THF at 75°C. After refluxing for 24 hours, the filter paper was taken out and introduced into an oven at 80°C wherein it was dried for 2 hours. The content of the THF-insoluble matters was calculated in accordance with the following formula.

$$\text{Content of THF-insoluble matters (wt.\%)} = \{(W-B)/A\} \times 100$$

wherein A represents the sample weight; B represents the filter paper weight; and W represents the total weight of the insoluble matters and the filter paper after drying.

(b) Number-average molecular weight of THF-soluble matters

Measurement was performed by High Performance Liquid Chromatography with the use of a device Model HLC-8020 manufactured by Tosoh Corporation, 2 columns TSK gel Models G-4000HHR and G-3000HHR and DMF as a solvent. The measurement was carried out at 40°C at a flow rate of 0.75 ml/min.

(c) Calorific value

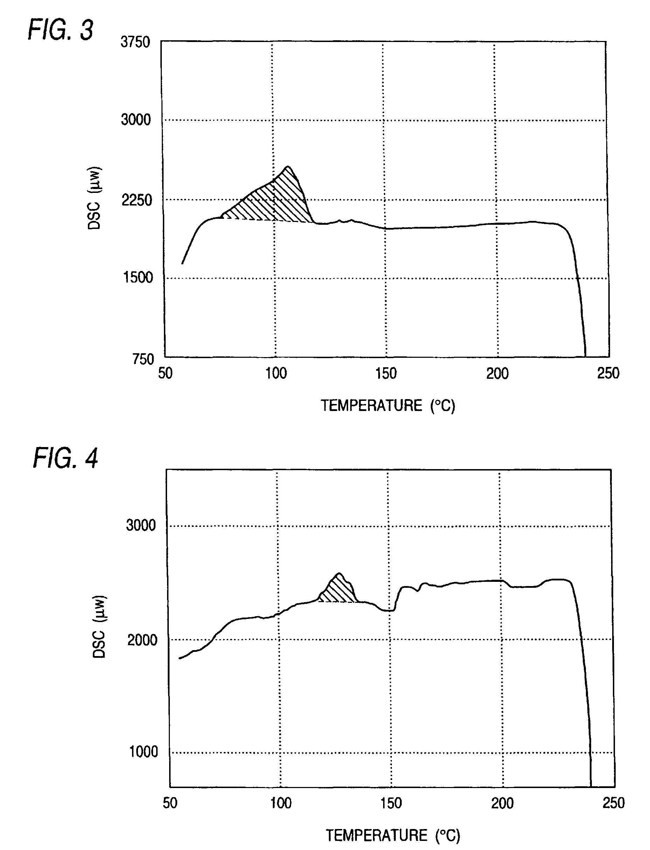

Measurement was performed by using a differential scanning calorimeter Model SSC5200 manufactured by Seiko Electronics. The sample was molten by heating to 250°C and then cooled at a rate of 10°C/min. Thus, the endothermic and exothermic values were determined. Fig. 4 shows the temperature-lowering curve of the TPU of Example 10.

(d) Evaluation of appearance

A crosslinked TPU was pulverized by frozen pulverization and an instrument panel having a skin material of about 800 $\mu$m in thickness was formed by using a mold (controlled at a surface temperature of 220°C) for producing instrument panels by the slush molding method. Then the appearance of this skin material was evaluated with the naked eye.

Criteria:     A: Good appearance with no pinhole.
              B: Somewhat poor appearance with small pinholes detectable exclusively through a magnifying glass.
              C: Poor appearance with large pinholes and some through holes.

As Table 3 shows, crosslinked TPU falling within the scope of the second aspect of the present invention are obtained in Examples 10 and 11 and skin materials having good appearance are produced therefrom. In Example 12 wherein the content of the THF-insoluble matters and the number-average molecular weight of the THF-soluble matters are each close to the lower limit while the calorific value is close to the upper limit, the obtained skin material is somewhat poor in the appearance.

(7) Temperature-lowering curve of Example 10 formed by using differential scanning calorimeter ((6)-(c))

As Fig. 4 shows, the crosslinked TPU of Example 10 shows no exothermic peak, since the crystallization is inhibited in the heat crosslinking in the step of molding.

(8) Instrument panel provided with tear line for airbag expansion

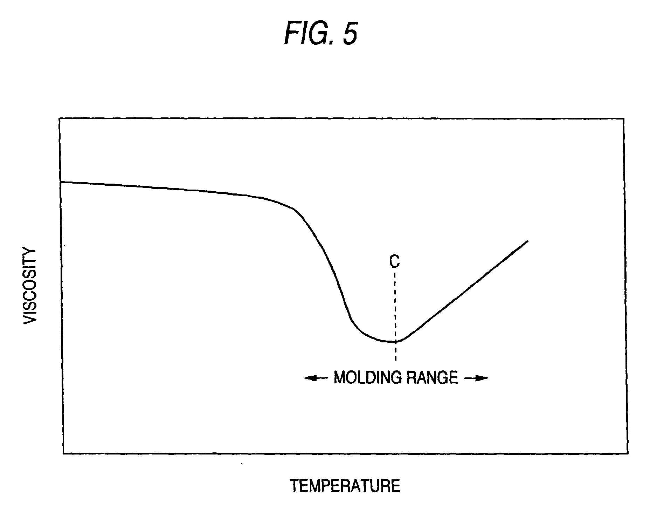

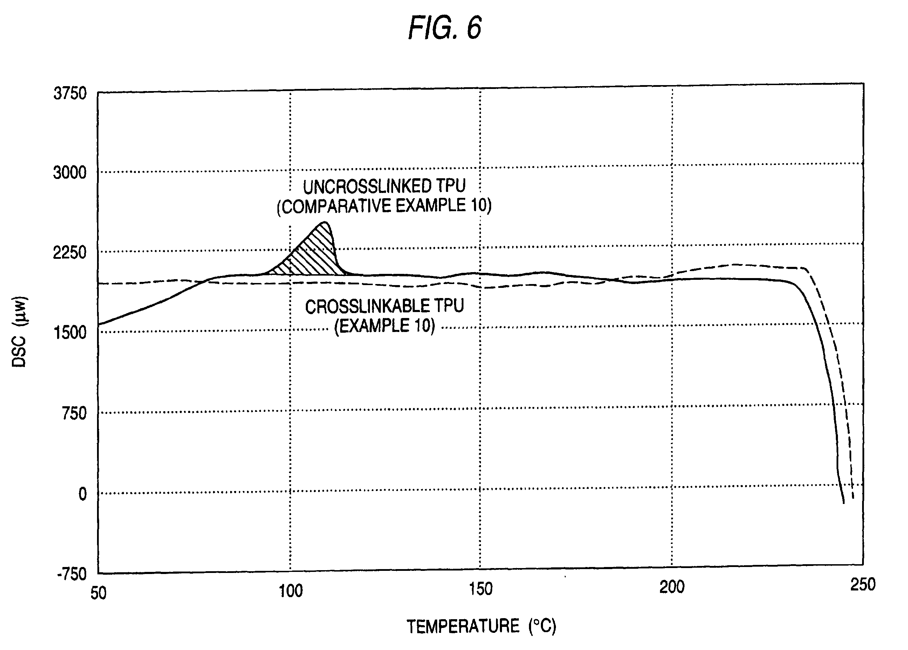

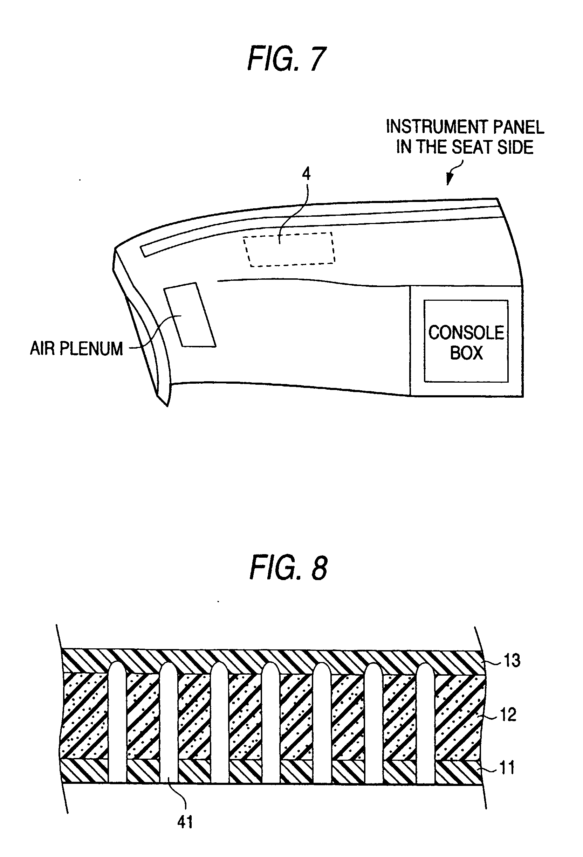

Fig. 5 shows the appearance of an instrument panel (1) (the one molded in (6)-(d)) in the seat side on the surface of which a tear line 4 (shown in a broken line) for airbag expansion is formed. Fig. 6 is a sectional view schematically showing the cross section of the tear line. This tear line can be provided by, for example, forming holes 41 by irradiating laser-beams from the backside of the instrument panel.

The instrument panel has a laminated structure consisting of a base 11, a foamed urethane layer 12 and the skin material 13. The holes penetrate through the base and the foamed urethane layer and reach the intermediate in the thickness direction of the skin layer. The depth of the holes varies depending on the strength of the skin material, etc., thus ranging from 20 to 80%, in particular, 40 to 80% based on the whole thickness of the skin material. Alternatively, these holes may penetrate through the skin material too. In this case, it is necessary to regulate the size of the holes formed on the surface of the instrument panel to such an level as making the tear line hardly visible (i.e., 100 $\mu$m or less in diameter).

The TPU for slush molding according to the present invention is excellent in moldability. In the step of molding, it shows no aggregation of TPU and thus a pinhole-free skin material excellent in the appearance, etc. can be obtained therefrom. When the TPU is used in, for example, a vehicle instrument panel provided with a tear line for airbag expansion, it shows a particularly excellent processability in laser beam machining, etc. Moreover, the TPU can be pulverized to give a TPU powder for slush molding which has excellent characteristics and a specific grain size. Thus, a skin material having a uniform thickness, a good appearance, etc. can be easily formed thereby.

**Claims**

1. A thermoplastic polyurethane elastomer for slush molding which shows a difference ($T_2$-$T_1$) of 20°C or less, wherein $T_1$ means the temperature at which its dynamic viscosity attains $5 \times 10^4$ poise; and $T_2$ means the temperature at which its dynamic viscosity attains $1 \times 10^4$ poise, and a dynamic viscosity of $6 \times 10^3$ poise or less at 220°C, when the dynamic viscoelasticity is measured at a frequency of 1 Hz.

2. A thermoplastic polyurethane elastomer for slush molding which shows a calorific value expressed in the exothermic peak area of 6 mJ/mg or more and an exothermic peak temperature of 100°C or above, when the differential scanning calorie is measured in the cooling process after melting.

3. A thermoplastic polyurethane elastomer powder for slush molding which is obtained by pulverizing the thermoplastic polyurethane elastomer for slush molding as claimed in claim 1 or 2.

4. The thermoplastic polyurethane elastomer powder for slush molding as claimed in claim 3, wherein 80% by weight or more of the grains pass through a 42-mesh Taylor's standard sieve but not a 150-mesh Taylor's standard sieve.

5. A skin material which is obtained by using the thermoplastic polyurethane elastomer powder for slush molding as claimed in claim 3 or 4 and performing slush molding.

6. A thermoplastic polyurethane elastomer for slush molding which contains 10% by weight or more of tetrahydrofuran-insoluble matters and tetrahydrofuran-soluble matters having a number-average molecular weight of 30,000 or more, after the completion of the crosslinking due to the heat in the molding step.

7. The thermoplastic polyurethane elastomer for slush molding as claimed in claim 6, which shows a calorific value expressed in the exothermic peak area of 5 mJ/mg or less, when the differential scanning calorie is measured in the cooling process after melting.

8. A thermoplastic polyurethane elastomer powder for slush molding, which is obtained by pulverizing the thermoplastic polyurethane elastomer for slush molding as claimed in claim 6 or 7 and wherein 80% by weight or more of the grains pass through a 42-mesh Taylor's standard.

9. A skin material which is obtained by using the thermoplastic polyurethane elastomer powder for slush molding as claimed in claim 8 performing slush molding.

## FIG. 1

## FIG. 2

FIG. 3

FIG. 4

# FIG. 5

FIG. 6

EP 1 033 379 A2

EP 1 033 379 A2

# FIG. 7

INSTRUMENT PANEL
IN THE SEAT SIDE

4

CONSOLE
BOX

AIR PLENUM

# FIG. 8

13

12

11

41

19